# EUROPEAN PATENT SPECIFICATION

(11) **EP 3 360 129 B1**
(45) Date of publication and mention of the grant of the patent: **12.08.2020**
(21) Application number: 16809254.2
(22) Date of filing: 18.11.2016
(51) Int. Cl.: G10L 15/19

(54) **RE-RECOGNIZING SPEECH WITH EXTERNAL DATA SOURCES**
WIEDERERKENNUNG VON SPRACHE MIT EXTERNEN DATENQUELLEN
NOUVELLE RECONNAISSANCE DE LA PAROLE AVEC DES SOURCES DE DONNÉES EXTERNES

(30) Priority: 05.02.2016 US 201615016609
(43) Date of publication of application: 15.08.2018
(73) Proprietor: Google LLC, Mountain View, CA 94043 (US)
(72) Inventor: STROHMAN, Trevor D., Mountain View, California 94043 (US); SCHALKWYK, Johan, Mountain View, California 94043 (US); SKOBELTSYN, Gleb, Mountain View, California 94043 (US)
(74) Representative: Watkin, Timothy Lawrence Harvey
(86) International application number: PCT/US2016/062753
(87) International publication number: WO 2017/136016

(56) References cited:
- US-A- 5 839 106
- US-A1- 2002 087 315
- US-A1- 2004 186 714
- US-A1- 2007 271 086
- US-A1- 2015 242 386
- US-B1- 9 047 868

## Description

### FIELD

The present specification relates to automated speech recognition.

### BACKGROUND

Speech recognition refers to the transcription of spoken words into text using an automated speech recognizer (ASR). In traditional ASR systems, received audio is converted into computer-readable sounds, which are then compared to a dictionary of words that are associated with a given language.

US2004/186714 describes a speech recognition process in which alternative hypotheses are scored using a scoring model which is separate from and external to the base speech recognition process used to generate a first hypothesis.

### SUMMARY

According to first, second and third aspects of the invention there is provided a computer-implemented method as defined in claim 1, a system as defined in claim 7 and software comprising instructions executable by one or more computers as defined in claim 11. In general, one innovative aspect of the subject matter described in this specification can be embodied in methods that improve speech recognition using an external data source,

Other versions include corresponding systems, computer programs, configured to perform the actions of the methods encoded on computer storage devices, and computer programs configured to cause computing apparatus to perform the actions of the methods.

One or more implementations may include the following optional features. For example, in some implementations, the language model that is not used by the automated speech recognizer in generating the initial candidate transcription includes one or more terms that are not in a language model used by the automated speech recognizer in generating the initial candidate transcription. In some aspects, the language model that is not used by the automated speech recognizer in generating the initial candidate transcription and a language model used by the automate speech recognizer in generating the initial candidate transcription both include a sequence of one or more terms but indicate the sequence as having different likelihoods of appearing.

In certain aspects, the language model that is not used by the automated speech recognizer in generating the initial candidate transcription indicates likelihoods that words or sequences of words appear.

In certain aspects, determining a likelihood score that reflects how frequently the candidate transcription is expected to be said includes determining the likelihood score based on the language model that is not used by the automated speech recognizer in generating the initial candidate transcription. In some implementations, generating one or more additional candidate transcriptions based on the identified one or more terms includes substituting the identified one or more terms that are phonetically similar to one or more terms that do occur in the initial candidate transcription with the one or more terms that do occur in the initial candidate transcription.

Technical advantages may include enabling data from an external data source to be used in generating more accurate transcriptions without modifying an existing automated speech recognizer. For example, applying the output of an automated speech recognizer to an updated language model may avoid computationally expensive re-compiling of the automated speech recognizer to use the updated language model. Another advantage may be that a system may recognize additional terms other than terms that an automated speech recognizer used to generate an initial transcription can recognize. Yet another advantage may be that different architectures of language models that may not typically be suited for a real-time speech recognition decoder may be incorporated. For example, a text file that includes a list of every song that a user has every listened to may be difficult to efficiently incorporate into a speech recognizer in real-time. However, in this system after a speech recognizer outputs an initial candidate transcription the information from the text file could be incorporated to determine a final transcription.

Determining whether terms are phonetically similar can involve determining a measure of similarity and comparing the measure to a threshold, or determining whether the measure of similarity is greater than measures of similarity relating to other term pairs.

The details of one or more implementations are set forth in the accompanying drawings and the description below. Other potential features and advantages will become apparent from the description, the drawings, and the claims.

Other implementations of these aspects include corresponding systems, apparatus and computer programs, configured to perform the actions of the methods, encoded on computer storage devices.

### BRIEF DESCRIPTION OF THE DRAWINGS

FIG. 1 illustrates an exemplary system that may be used to improve speech recognition using an external data source.
FIG. 2 illustrates an exemplary process for improving speech recognition using an external data source.
FIG. 3 is a block diagram of computing devices on which the processes described herein, or portions thereof, may be implemented.

In the drawings, like reference numbers represent corresponding parts throughout.

### DETAILED DESCRIPTION

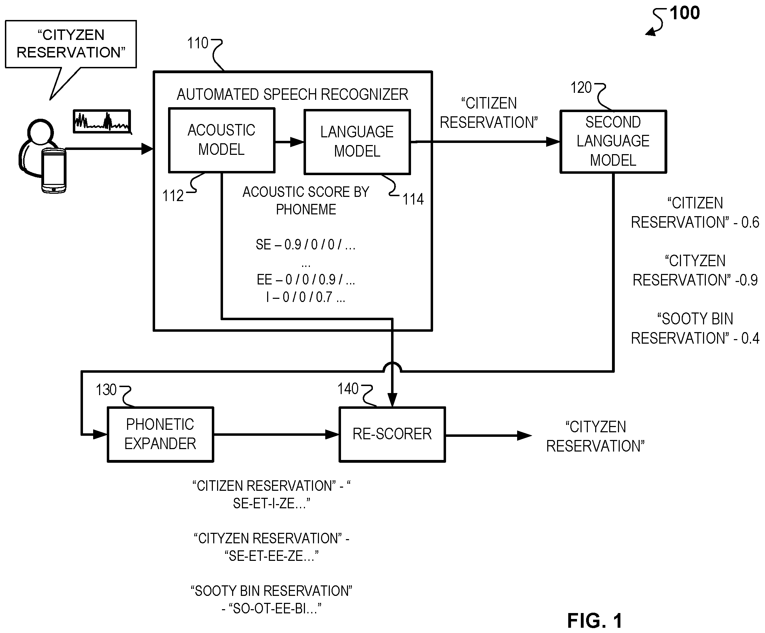

FIG. 1 illustrates an exemplary system 100 that may be used to improve speech recognition using an external data source. Briefly, the system 100 may include an automated speech recognizer (ASR) 110 that includes an acoustic model 112 and a language model 114, a second language model 120, a phonetic expander 130, and a re-scorer 140.

In more detail, the ASR 110 may receive acoustic data that encode an utterance. For example, the ASR 110 may receive acoustic data that corresponds to the utterance "CityZen reservation." The acoustic data may include, for example, raw waveform data, mel-likelihood cepstral coefficients or any other acoustic or phonetic representation of audio.

The acoustic model 112 of the ASR 110 may receive the acoustic data and generate acoustic scores for words or subwords, e.g., phonemes, corresponding to the acoustic data. The acoustic scores may reflect a phonetic similarity between the words or subwords and the acoustic data. For example, the acoustic model may receive the acoustic data for "CityZen reservation" and generate acoustic scores of "SE - 0.9/ 0 / 0 / ..., ...EE - 0 / 0 / 0.9 / ...1 - 0 / 0.7 / 0 /...." The example acoustic scores may indicate that for the phoneme "SE" there is a 90% acoustic match for the first sub-word in the utterance, a 0% acoustic match for the second sub-word in the utterance, and a 0% acoustic match for the third sub-word in the utterance, for the phoneme "EE" there is a 0% acoustic match for the first sub-word in the utterance, a 0% match for the second sub-word in the utterance, and a 90% match for the third sub-word in the utterance, and for the phoneme "I" there is a 0% acoustic match for the first sub-word in the utterance, a 0% acoustic match for the second sub-word in the utterance, and a 70% acoustic match for the third sub-word in the utterance. In the example above, the acoustic model 112 may output an acoustic score for each combination of phoneme and position of subword in the utterance.

The acoustic model 112 may generate the acoustic scores based on comparing waveforms indicated by the acoustic data with waveforms indicated as corresponding to particular subwords. For example, the acoustic model 112 may receive acoustic data for the utterance of "CityZen reservation" and identify that the beginning of the acoustic data represents a waveform that has a 90% match with a stored waveform for the phoneme "SE," and in response, generate an acoustic score of 0.9 for the first phoneme in the utterance being the phoneme "SE."

The language model 114 of the ASR 110 may receive the acoustic scores and generate an initial candidate transcription based on the acoustic scores. For example, the language model 114 of the ASR 110 may receive the acoustic scores of "SE - 0.9 / 0/0/ ..., ...EE - 0 / 0 / 0.9 / ...1- 0 / 0 / 0.7 / ....," and in response, generate an initial candidate transcription of "Citizen reservation."

The language model 114 may generate the initial candidate transcription based on likelihoods that sequences of words occur and the acoustic scores. For example, the language model 114 may generate the candidate transcription of "Citizen reservation" based on a likelihood that the words "CityZen reservation" occurring is 0%, e.g., because the word "CityZen" is not in the language model 114, the likelihood of the words "Citizen reservation" occurring is 70%, the acoustic scores for "CityZen reservation" that indicate that an utterance sounds acoustically more similar to "City" followed by "Zen" than "Citizen," and generate an initial candidate transcription of "Citizen reservation."

In some implementations, the language model 114 may indicate the likelihood of sequences of words as a likelihood score and in generating the initial candidate transcription, the language model 114 may multiple the acoustic match scores and the likelihood scores. For example, for the phonemes "SE-ET-EE-ZE" the language model 114 may multiply the acoustic match scores of 0.9, 0.9, 0.9, 0.7 with a likelihood score of 0.0 for "City" followed by "Zen" to result in a score of 0 and for the phonemes "SE-ET-I-ZE" the language model 114 may multiply the acoustic match scores of 0.9, 0.9, 0.7, 0.9 with a likelihood score of 0.9 for "Citizen" to result in a score of 0.45, and then select the word "Citizen" as its score of 0.45 is better than the score of 0 for "City" followed by "Zen."

The ASR 110 may output the initial transcription generated by the language model 114. For example, the ASR 110 may output the initial transcription of "Citizen reservation" generated by the language model 114 in response to receiving acoustic scores based on acoustic data for the utterance "CityZen reservation."

The second language model 120 may receive the initial transcription and generate additional candidate transcriptions. For example, the second language model 120 may receive the initial transcription "Citizen reservation" and, in response, generate additional transcriptions of "CityZen reservation" and "Sooty bin reservation."

The second language model 120 may generate the additional candidate transcriptions based on identifying one or more terms that are phonetically similar to one or more terms that do occur in the initial candidate transcription and substituting the one or more terms that do occur in the initial candidate transcription with the identified one or more terms that are phonetically similar. For example, the second language model 120 may receive the initial candidate transcription of "Citizen reservation," identify the terms "CityZen" and "Sooty bin" are both phonetically similar to the term "Citizen," and in response, generate the additional candidate transcriptions of "CityZen reservation" and "Sooty bin reservation" by substituting "Citizen" with "CityZen" and "Sooty bin," respectively.

In some implementations, the second language model 120 may identify terms that are phonetically similar based on storing phonetic representations for words and identifying terms that are phonetically similar based on the stored phonetic representations. For example, the second language model 120 may store information that indicates that "Citizen" may be represented by the phonemes "SE-ET-I-ZE-EN" and that "City" and "Zen" may be represented by the phonemes "SE-ET-EE-ZE-EN," receive the term "Citizen" in an initial transcription, determine the term corresponds to the phonemes "SE-ET-I-ZE-EN," determine that the phonemes "SE-ET-I-ZE-EN" are similar to the phonemes of "SE-ET-EE-ZE-EN" that are associated with "City" and "Zen," and, in response, determine identify the term "Citizen" is phonetically similar to the terms "CityZen."

In some implementations, the second language model 120 may determine how similar phonemes sound based on acoustic representations of the phonemes. For example, the second language model 120 may determine that the phoneme "EE" and the phoneme "I" are more similar to each other than the phoneme "EE" and the phoneme "ZA" based on determining that the acoustic representation for the phoneme "EE" is more similar to the acoustic representation of the phoneme "I" than the acoustic representation of the phoneme "ZA." In some implementations, the second language model 120 may additionally or alternatively identify terms that are phonetically similar based on explicit indications of words that sound similar. For example, the second language model 120 may include information that explicitly indicates that "Floor" and "Flour" sound phonetically similar.

The second language model 120 may generate the additional candidate transcriptions based on a likelihood of a sequence of words in the candidate transcriptions occurring. For example, the second language model 120 may determine that the sequence of words "CityZen reservation" has a high likelihood of occurring and, in response, determine to output "CityZen reservation" as an additional candidate. In another example, the second language model 120 may determine that the sequence of words "Sooty zen reservation" has a low likelihood of occurring and, in response, determine not to output "Sooty zen reservation" as an additional candidate.

In some implementations, the second language model 120 may generate candidate transcriptions based on a combination of phonetic similarity to the initial candidate transcription and a likelihood of the candidate transcription occurring. For example, the second language model 120 may determine not to output "Sooty zen reservation" but output "Sooty bin reservation" because, while "Sooty zen reservation" sounds phonetically more similar to "Citizen reservation," "Sooty zen reservation" has a very low likelihood of occurring according to the second language model 120 and "Sooty bin reservation," while sounding slightly less similar to "Citizen reservation," has a moderate likelihood of occurring.

The second language model 120 may output the candidate transcriptions with associated likelihood scores. For example, in response to receiving "Citizen reservation" the second language model 120 may output "Citizen reservation" associated with a moderate likelihood score of 0.6, output "CityZen reservation" associated with a high likelihood score of 0.9, and output "Sooty bin reservation" with a moderate likelihood score of 0.4. The likelihood scores may reflect the likelihood of the sequence of one or more words in the candidate transcription occurring in a given language.

In some implementations, the second language model 120 may determine the likelihood score for a candidate transcription based on storing likelihood scores for sequences of one or more words, identifying the sequences of one or more words that are in the candidate transcription, and generating the likelihood score for the candidate transcription based on the likelihood scores for the sequences of one or more words identified to be in the candidate transcription. In one example, the second language model 120 may determine sequences of "Sooty bin" and "reservation" are in the candidate transcription "Sooty bin reservation" and are pre-associated with likelihood scores of 0.8 and 0.5, respectively, and generate a likelihood score for the candidate transcription "Sooty bin reservation" by multiplying the likelihood scores of 0.8 and 0.5 to result in 0.4. In another example, the second language model 120 may determine the entire sequence "CityZen reservation" is pre-associated with a likelihood score of 0.9 and entirely matches the candidate transcription "CityZen reservation," and in response, determine that the likelihood score of the candidate transcription "CityZen reservation" is 0.9.

The phonetic expander 130 may receive the candidate transcriptions from the second language model 120 and expand the candidate transcriptions into subwords. For example, the phonetic expander 130 may receive "Citizen reservation" and generate the phonetic expansion "SE-ET-I-ZE...," receive "CityZen reservation" and generate the phonetic expansion "SE-ET-EE-ZE...," and receive "Sooty bin reservation" and generate the phonetic expansion "SO-OT-EE-BI..." In some implementations the phonetic expander 130 may expand the candidate transcriptions into subwords based on pre-determined expansion rules. For example, a rule may define that "SOO" is expanded into the phoneme "SO." In another example, a rule may define that the word "Sooty" is expanded into the phonemes "SO-OT-EE."

The re-scorer 140 may receive the phonetic expansions for each of the candidate transcriptions from the phonetic expander, receive the associated likelihood score for each of the candidate transcriptions from the second language model 120, receive the acoustic scores from the acoustic model 112, generate an overall score for the candidate transcriptions based on a combination of the likelihood scores and the acoustic scores from the acoustic model 112, and select a transcription from among the candidate transcriptions based on the overall scores. For example, the re-scorer may receive the candidate transcription "Citizen reservation" associated with a moderate likelihood score of 0.6 and a phonetic expansion "SE-ET-I-ZE...," the candidate transcription "CityZen reservation" associated with a high likelihood score of 0.9 and a phonetic expansion "SE-ET-EE-ZE...," and the candidate transcription "Sooty bin reservation" associated with a moderate likelihood score of 0.4 and a phonetic expansion "SO-OT-EE-BI...," receive the acoustic scores of "SE - 0.9 / 0 / 0 /..., ...EE - 0/0/0.9/ ... l - 0 / 0.7 / 0 / ....," generate an overall score of 0.8 for "CityZen reservation," an overall score of 0.6 for "Citizen reservation," and an overall score of 0.3 for "Sooty bin reservation," and select "CityZen reservation" as it has the highest overall score.

In some implementations, in re-scorer 140 may generate an overall score based on a combination of the likelihood score and an acoustic match score for a candidate utterance. For example, the re-scorer 140 may generate an overall score of 0.7 for a candidate transcription based on multiplying a likelihood score of 0.9 for the candidate transcription and an acoustic match score of 0.8 for the candidate transcription.

In some implementations, the re-scorer 140 may generate the acoustic match score for a candidate utterance based on the acoustic scores from the acoustic model 112 and the phonetic expansions from the phonetic expander 130. Particularly, the re-scorer 140 may receive phonetic expansions that include multiple subwords, identify the acoustic scores corresponding to each of the multiple subwords, and generate an acoustic match score for each candidate utterance based on the acoustic scores of the multiple subwords that are included in the phonetic expansion of the candidate utterance. For example, the re-scorer 140 may receive a phonetic expansion of "SE-ET-EE-ZE..." for "CityZen reservation," identify the acoustic scores received from the acoustic model 112 for each of the phonemes "SE-ET-EE-ZE...," and multiply the identified acoustic scores to generate the acoustic match score for "CityZen reservation."

In some implementations, the re-scorer 140 may not receive all of the acoustic scores from the acoustic model 112. Instead, the re-scorer 140 may receive the phonetic expansions from the phonetic expander 130 and provide a request to the acoustic model 112 for only the acoustic scores that correspond to the subwords in the phonetic expansions received from the phonetic expander 130. For example, the re-scorer 140 may request that the acoustic model 112 provide acoustic scores for the phonemes "SE," "ET," "I," "ZE" and other phonemes that appear in phonetic expansions, and not the phonemes, "BA," "FU," "KA," and other phonemes that do not appear in the phonetic expansions.

In some implementations, the re-scorer 140 may consider other factors in selecting a transcription from among the candidate transcriptions. For example, the re-scorer 140 may identify a current location of a user and weight the selection towards identifying candidate transcriptions that have a closer association with the current location of the user. In another example, the re-scorer 140 may identify a current time of day and weight the selection towards identifying candidate transcriptions that have a closer association with the time of day. In yet another example, the re-scorer 140 may identify preferences of a user providing an utterance and weight the selection towards identifying candidate transcriptions that have a closer association with identified preferences of the user.

Different configurations of the system 100 may be used where functionality of the acoustic model 112, the language model 114, the automated speech recognizer 110, the second language model 120, the phonetic expander 130, and the re-scorer 140 may be combined, further separated, distributed, or interchanged. The system 100 may be implemented in a single device or distributed across multiple devices.

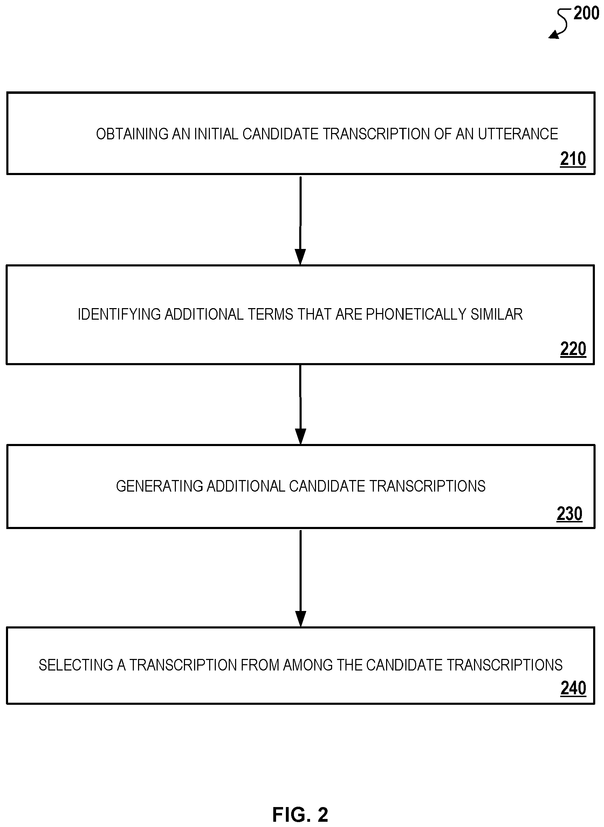

FIG. 2 is a flowchart of an example process 200 for improving speech recognition based on external data sources. The following describes the processing 200 as being performed by components of the system 100 that are described with reference to FIG. 1. However, the process 200 may be performed by other systems or system configurations.

The process 200 may include obtaining an initial candidate transcription of an utterance using an automated speech recognizer (210). For example, the automated speech recognizer 110 may receive acoustic data for an utterance of "Zaytinya reservation" and output an initial candidate transcription of "Say tin ya reservation"

The process 200 may include identifying, based on a language model that is not used by the automated speech recognizer in generating the initial candidate transcription, one or more additional terms that are phonetically similar to the initial candidate transcription (220). For example, the second language model 120 may identify that the terms "Zaytinya" and "Say ten ya" sound phonetically similar to "Say tin ya."

The process 200 may include generating one or more additional candidate transcriptions based on the additional one or more terms (230). For example, the second language model 120 may generate the additional candidate transcriptions of "Zaytinya reservation" and "Say ten ya reservation" based on replacing "Say tin ya" with "Zaytinya" and "Say ten ya" in the initial candidate utterance "Say tin ya reservation."

The process 200 may include selecting a transcription from among the candidate transcriptions (240). For example, the re-scorer 140 may select the transcription "Zaytinya reservation" from among the candidate transcriptions "Say tin ya reservation," "Zaytinya reservation," and "Say ten ya reservation." The selection may be based on likelihood scores and acoustic match scores for each of the candidate transcriptions. For example, the selection may be based on identifying the candidate transcription with a likelihood score that indicates a high likelihood of the candidate utterance occurring in a given language and an acoustic match score that indicates a close acoustic similarity of the candidate utterance with acoustic data.

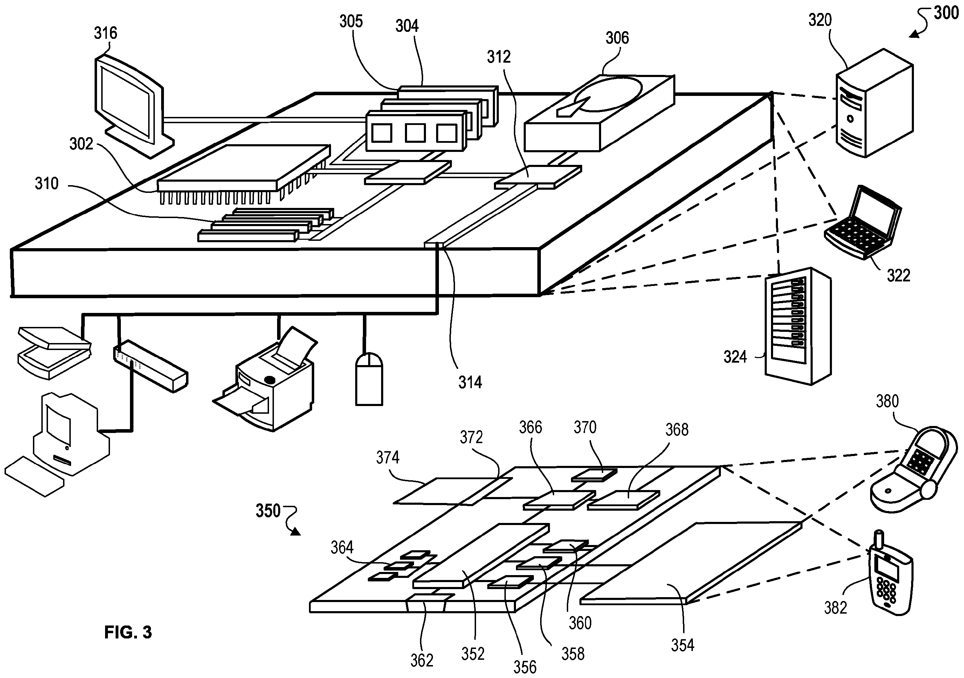

FIG. 3 is a block diagram of computing devices 300, 350 that may be used to implement the systems and methods described in this document, as either a client or as a server or plurality of servers. Computing device 300 is intended to represent various forms of digital computers, such as laptops, desktops, workstations, personal digital assistants, servers, blade servers, mainframes, and other appropriate computers. Computing device 350 is intended to represent various forms of mobile devices, such as personal digital assistants, cellular telephones, smartphones, and other similar computing devices. Additionally computing device 300 or 350 can include Universal Serial Bus (USB) flash drives. The USB flash drives may store operating systems and other applications. The USB flash drives can include input/output components, such as a wireless transmitter or USB connector that may be inserted into a USB port of another computing device. The components shown here, their connections and relationships, and their functions, are meant to be exemplary only, and are not meant to limit implementations described in this document as far as they still fall under the scope as defined by the appended claims.

Computing device 300 includes a processor 302, memory 304, a storage device 306, a high-speed interface 308 connecting to memory 304 and high-speed expansion ports 310, and a low speed interface 312 connecting to low speed bus 314 and storage device 306. Each of the components 302, 304, 306, 308, 310, and 312, are interconnected using various busses, and may be mounted on a common motherboard or in other manners as appropriate. The processor 302 can process instructions for execution within the computing device 300, including instructions stored in the memory 304 or on the storage device 306 to display graphical information for a GUI on an external input/output device, such as display 316 coupled to high speed interface 308. In other implementations, multiple processors and/or multiple buses may be used, as appropriate, along with multiple memories and types of memory. Also, multiple computing devices 300 may be connected, with each device providing portions of the necessary operations, e.g., as a server bank, a group of blade servers, or a multiprocessor system.

The memory 304 stores information within the computing device 300. In one implementation, the memory 304 is a volatile memory unit or units. In another implementation, the memory 304 is a non-volatile memory unit or units. The memory 304 may also be another form of computer-readable medium, such as a magnetic or optical disk.

The storage device 306 is capable of providing mass storage for the computing device 300. In one implementation, the storage device 306 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 304, the storage device 306, or memory on processor 302.

The high speed controller 308 manages bandwidth-intensive operations for the computing device 300, while the low speed controller 312 manages lower bandwidth intensive operations. Such allocation of functions is exemplary only. In one implementation, the high-speed controller 308 is coupled to memory 304, display 316, e.g., through a graphics processor or accelerator, and to high-speed expansion ports 310, which may accept various expansion cards (not shown). In the implementation, low-speed controller 312 is coupled to storage device 306 and low-speed expansion port 314. The low-speed expansion port, which may include various communication ports, e.g., USB, Bluetooth, Ethernet, wireless Ethernet may be coupled to one or more input/output devices, such as a keyboard, a pointing device, microphone/speaker pair, a scanner, or a networking device such as a switch or router, e.g., through a network adapter. The computing device 300 may be implemented in a number of different forms, as shown in the figure. For example, it may be implemented as a standard server 320, or multiple times in a group of such servers. It may also be implemented as part of a rack server system 324. In addition, it may be implemented in a personal computer such as a laptop computer 322. Alternatively, components from computing device 300 may be combined with other components in a mobile device (not shown), such as device 350. Each of such devices may contain one or more of computing device 300, 350, and an entire system may be made up of multiple computing devices 300, 350 communicating with each other.

The computing device 300 may be implemented in a number of different forms, as shown in the figure. For example, it may be implemented as a standard server 320, or multiple times in a group of such servers. It may also be implemented as part of a rack server system 324. In addition, it may be implemented in a personal computer such as a laptop computer 322. Alternatively, components from computing device 300 may be combined with other components in a mobile device (not shown), such as device 350. Each of such devices may contain one or more of computing device 300, 350, and an entire system may be made up of multiple computing devices 300, 350 communicating with each other.

Computing device 350 includes a processor 352, memory 364, and an input/output device such as a display 354, a communication interface 366, and a transceiver 368, among other components. The device 350 may also be provided with a storage device, such as a microdrive or other device, to provide additional storage. Each of the components 350, 352, 364, 354, 366, and 368, are interconnected using various buses, and several of the components may be mounted on a common motherboard or in other manners as appropriate.

The processor 352 can execute instructions within the computing device 350, including instructions stored in the memory 364. The processor may be implemented as a chipset of chips that include separate and multiple analog and digital processors. Additionally, the processor may be implemented using any of a number of architectures. For example, the processor 310 may be a CISC (Complex instruction Set Computers) processor, a RISC (Reduced Instruction Set Computer) processor, or a MISC (Minimal Instruction Set Computer) processor. The processor may provide, for example, for coordination of the other components of the device 350, such as control of user interfaces, applications run by device 350, and wireless communication by device 350.

Processor 352 may communicate with a user through control interface 358 and display interface 356 coupled to a display 354. The display 354 may be, for example, a TFT (Thin-Film-Transistor Liquid Crystal Display) display or an OLED (Organic Light Emitting Diode) display, or other appropriate display technology. The display interface 356 may comprise appropriate circuitry for driving the display 354 to present graphical and other information to a user. The control interface 358 may receive commands from a user and convert them for submission to the processor 352. In addition, an external interface 362 may be provided in communication with processor 352, so as to enable near area communication of device 350 with other devices. External interface 362 may provide, for example, for wired communication in some implementations, or for wireless communication in other implementations, and multiple interfaces may also be used.

The memory 364 stores information within the computing device 350. The memory 364 can be implemented as one or more of a computer-readable medium or media, a volatile memory unit or units, or a non-volatile memory unit or units. Expansion memory 374 may also be provided and connected to device 350 through expansion interface 372, which may include, for example, a SIMM (Single In Line Memory Module) card interface. Such expansion memory 374 may provide extra storage space for device 350, or may also store applications or other information for device 350. Specifically, expansion memory 374 may include instructions to carry out or supplement the processes described above, and may include secure information also. Thus, for example, expansion memory 374 may be provided as a security module for device 350, and may be programmed with instructions that permit secure use of device 350. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 364, expansion memory 374, or memory on processor 352 that may be received, for example, over transceiver 368 or external interface 362.

Device 350 may communicate wirelessly through communication interface 366, which may include digital signal processing circuitry where necessary. Communication interface 366 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-likelihood transceiver 368. In addition, short-range communication may occur, such as using a Bluetooth, WiFi, or other such transceiver (not shown). In addition, GPS (Global Positioning System) receiver module 370 may provide additional navigation- and location-related wireless data to device 350, which may be used as appropriate by applications running on device 350.

Device 350 may also communicate audibly using audio codec 360, which may receive spoken information from a user and convert it to usable digital information. Audio codec 360 may likewise generate audible sound for a user, such as through a speaker, e.g., in a handset of device 350. Such sound may include sound from voice telephone calls, may include recorded sound, e.g., voice messages, music files, etc. and may also include sound generated by applications operating on device 350.

The computing device 350 may be implemented in a number of different forms, as shown in the figure. For example, it may be implemented as a cellular telephone 480. It may also be implemented as part of a smartphone 382, personal digital assistant, or other similar mobile device.

Various implementations of the systems and methods described here can be realized in digital electronic circuitry, integrated circuitry, specially designed ASICs (application specific integrated circuits), computer hardware, firmware, software, and/or combinations of such implementations. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device, e.g., magnetic discs, optical disks, memory, Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device, e.g., a CRT (cathode ray tube) or LCD (liquid crystal display) monitor for displaying information to the user and a keyboard and a pointing device, e.g., a mouse or a trackball by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The systems and techniques described here can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the systems and techniques described here, or any combination of such back end, middleware, or front end components. The components of the system can be interconnected by any form or medium of digital data communication, e.g., a communication network. Examples of communication networks include a local area network ("LAN"), a wide area network ("WAN"), and the internet.

The computing system can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention. In addition, the logic flows depicted in the figures may not require the particular order shown, or sequential order, to achieve desirable results. In addition, other steps may be provided, or steps may be eliminated, from the described flows, and other components may be added to, or removed from, the described systems. Accordingly, other embodiments may be within the scope of the following claims.

## Claims

1. A computer-implemented method comprising:
obtaining (210), from a language model of an automated speech recognizer (110), an initial candidate transcription of an utterance based on acoustic scores generated by an acoustic model (112) of the automated speech recognizer (110) for sub-words corresponding to acoustic data received by the automated speech recognizer, the acoustic data encoding the utterance;
identifying (220), based on a language model (120) that is not used by the automated speech recognizer in generating the initial candidate transcription, one or more terms that are phonetically similar to one or more terms that occur in the initial candidate transcription;
generating (230) one or more additional candidate transcriptions based on the identified one or more terms,
for each of the candidate transcriptions, determining a likelihood score that reflects how frequently the candidate transcription is expected to be said;
for each of the candidate transcriptions, expanding the candidate transcription into sub-words, identifying acoustic scores from the acoustic model that correspond to each of the sub-words of the candidate transcription and determining an acoustic match score from the acoustic scores identified from the acoustic model (112) for the sub-words of the candidate transcription, the acoustic match score reflecting a phonetic similarity between the candidate transcription and the utterance; and
selecting (240) a transcription from among the candidate transcriptions based on respective overall scores generated based on a combination of the acoustic match scores and the likelihood scores.

2. The method of claim 1, wherein the language model (120) that is not used by the automated speech recognizer (110) in generating the initial candidate transcription includes one or more terms that are not in a language model used by the automated speech recognizer in generating the initial candidate transcription.

3. The method of claim 1 or claim 2, wherein the language model (120) that is not used by the automated speech recognizer (110) in generating the initial candidate transcription and a language model (114) used by the automate speech recognizer in generating the initial candidate transcription both include a sequence of one or more terms but indicate the sequence as having different likelihoods of appearing.

4. The method of any preceding claim, wherein the language model (120) that is not used by the automated speech recognizer in generating the initial candidate transcription indicates likelihoods that words or sequences of words appear.

5. The method of any preceding claim, wherein determining a likelihood score that reflects how frequently the candidate transcription is expected to be said comprises:
determining the likelihood score based on the language model that is not used by the automated speech recognizer in generating the initial candidate transcription.

6. The method of any preceding claim, wherein generating one or more additional candidate transcriptions based on the identified one or more terms comprises:
substituting the identified one or more terms that are phonetically similar to one or more terms that do occur in the initial candidate transcription with the one or more terms that do occur in the initial candidate transcription.

7. A system comprising:
one or more computers (300) and one or more storage devices (304, 306) storing instructions that are operable, when executed by the one or more computers, to cause the one or more computers to perform operations comprising:
obtaining (210) from a language model of an automated speech recognizer (110), an initial candidate transcription of an utterance based on acoustic scores generated by an acoustic model (112) of the automated speech recognizer (110) for sub-words corresponding to acoustic data received by the automated speech recognizer, the acoustic data encoding the utterance;
identifying (220), based on a language model (120) that is not used by the automated speech recognizer in generating the initial candidate transcription, one or more terms that are phonetically similar to one or more terms that do occur in the initial candidate transcription;
generating (230) one or more additional candidate transcriptions based on the identified one or more terms;
for each of the candidate transcriptions, determining a likelihood score that reflects how frequently the candidate transcription is expected to be said ; Z
for each of the candidate transcriptions, expanding the candidate transcription into sub-words, identifying acoustic scores from the acoustic model that correspond to each of the sub-words of the candidate transcription and determining an acoustic match score from the acoustic scores identified from the acoustic model (112) for the sub-words of the candidate transcription, the acoustic match score reflecting a phonetic similarity between the candidate transcription and the utterance; and
selecting (240) a transcription from among the candidate transcriptions based on respective overall scores generated based on a combination of the acoustic match scores and the likelihood scores.

8. The system of claim 7, wherein the language model (120) that is not used by the automated speech recognizer (110) in generating the initial candidate transcription includes one or more terms that are not in a language model (114) used by the automated speech recognizer in generating the initial candidate transcription.

9. The system of claim 7 or claim 8, wherein the language model (120) that is not used by the automated speech recognizer (110) in generating the initial candidate transcription and a language model (114) used by the automate speech recognizer in generating the initial candidate transcription both include a sequence of one or more terms but indicate the sequence as having different likelihoods of appearing.

10. The system of any of claims 7 to 9, wherein the language model (120) that is not used by the automated speech recognizer (110) in generating the initial candidate transcription indicates likelihoods that words or sequences of words appear.

11. Software comprising instructions executable by one or more computers which, upon such execution, cause the one or more computers to perform the method of any of claims 1 to 6.

## Patentansprüche

1. Computerimplementiertes Verfahren, umfassend:
Erhalten (210), aus einem Sprachmodell eines automatisierten Spracherkenners (110), einer anfänglichen Kandidatentranskription einer Äußerung, basierend auf akustischen Bewertungsergebnissen, welche durch ein akustisches Modell (112) des automatisierten Spracherkenners (110) für Teilwörter erzeugt werden, welche akustischen Daten entsprechen, die durch den automatisierten Spracherkenner empfangen werden, wobei die akustischen Daten die Äußerung codieren;
Identifizieren (220), basierend auf einem Sprachmodell (120), welches nicht durch den automatisierten Spracherkenner zum Erzeugen der anfänglichen Kandidatentranskription verwendet wird, eines oder mehrerer Begriffe, welche einem oder mehreren Begriffen phonetisch ähnlich sind, welche in der anfänglichen Kandidatentranskription vorkommen;
Erzeugen (230) einer oder mehrerer zusätzlichen Kandidatentranskriptionen, basierend auf dem einen oder den mehreren identifizierten Begriffen,
für jede der Kandidatentranskriptionen, Bestimmen einer Wahrscheinlichkeitsbewertung, welche angibt, wie häufig die Kandidatentranskription voraussichtlich ausgesprochen wird;
für jede der Kandidatentranskriptionen, Erweitern der Kandidatentranskription auf Teilwörter, Identifizieren von akustischen Bewertungen aus dem akustischen Modell, welche jedem der Teilwörter der Kandidatentranskription entsprechen und Bestimmen einer akustischen Übereinstimmungsbewertung aus den akustischen Bewertungen, die aus dem akustischen Modell (112) für die Teilwörter der Kandidatentranskription identifiziert wurden, wobei die akustische Übereinstimmungsbewertung eine phonetische Ähnlichkeit zwischen der Kandidatentranskription und der Äußerung angibt; und
Auswählen (240) einer Transkription unter den Kandidatentranskriptionen, basierend auf entsprechende Gesamtbewertungen, welche basierend auf einer Kombination der akustischen Übereinstimmungsbewertungen und der Wahrscheinlichkeitsbewertungen erzeugt werden.

2. Verfahren nach Anspruch 1, wobei das Sprachmodell (120), welches nicht durch den automatisierten Spracherkenner (110) zum Erzeugen der anfänglichen Kandidatentranskription verwendet wird, einen oder mehrere Begriffe umfasst, welche nicht in einem Sprachmodell vorhanden sind, welches durch den automatisierten Spracherkenner zum Erzeugen der anfänglichen Kandidatentranskription verwendet wird.

3. Verfahren nach Anspruch 1 oder 2, wobei sowohl das Sprachmodell (120), welches nicht durch den automatisierten Spracherkenner (110) zum Erzeugen der anfänglichen Kandidatentranskription verwendet wird als auch ein Sprachmodell (114), welches durch den automatisierten Spracherkenner zum Erzeugen der anfänglichen Kandidatentranskription verwendet wird, eine Sequenz aus einem oder mehreren Begriffen umfassen, obwohl sie angeben, dass die Sequenz unterschiedliche Wahrscheinlichkeiten des Auftretens aufweist.

4. Verfahren nach einem der vorhergehenden Ansprüche, wobei das Sprachmodell (120), welches nicht durch den automatisierten Spracherkenner (110) zum Erzeugen der anfänglichen Kandidatentranskription verwendet wird, Wahrscheinlichkeiten des Auftretens von Wörtern oder Wortsequenzen angibt.

5. Verfahren nach einem der vorhergehenden Ansprüche, wobei das Bestimmen einer Wahrscheinlichkeitsbewertung, welche die Häufigkeit der voraussichtlichen Aussprache der Kandidatentranskription angibt, umfasst: Bestimmen der Wahrscheinlichkeitsbewertung basierend auf dem Sprachmodell, welches nicht durch den automatisierten Spracherkenner (110) zum Erzeugen der anfänglichen Kandidatentranskription verwendet wird.

6. Verfahren nach einem der vorhergehenden Ansprüche, wobei das Erzeugen einer oder mehrerer zusätzlicher Kandidatentranskriptionen basierend auf dem einen oder den mehreren identifizierten Begriffen, umfasst:
Ersetzen des einen oder der mehreren identifizierten Begriffen, welche dem einen oder den mehreren Begriffen ähnlich sind, die in der anfänglichen Kandidatentranskription vorkommen, mit dem einen oder den mehreren Begriffen, welche in der anfänglichen Kandidatentranskription vorkommen.

7. System, umfassend:
einen oder mehrere Computer (300) und eine oder mehrere Speichervorrichtungen (304, 306), welche Anweisungen speichern, welche, wenn durch den einen oder die mehreren Computer ausgeführt, veranlassen, dass der eine oder die mehreren Computer Operationen ausführen, umfassend:
Erhalten (210), aus einem Sprachmodell eines automatisierten Spracherkenners (110), einer anfänglichen Kandidatentranskription einer Äußerung, basierend auf akustischen Bewertungsergebnissen, welche durch ein akustisches Modell (112) des automatisierten Spracherkenners (110) für Teilwörter erzeugt werden, welche akustischen Daten entsprechen, die durch den automatisierten Spracherkenner empfangen werden, wobei die akustischen Daten die Äußerung codieren;
Identifizieren (220), basierend auf einem Sprachmodell (120), welches nicht durch den automatisierten Spracherkenner zum Erzeugen der anfänglichen Kandidatentranskription verwendet wird, eines oder mehrerer Begriffe, welche einem oder mehreren Begriffen phonetisch ähnlich sind, welche in der anfänglichen Kandidatentranskription vorkommen;
Erzeugen (230) einer oder mehrerer zusätzlichen Kandidatentranskriptionen, basierend auf dem einen oder den mehreren identifizierten Begriffen,
für jede der Kandidatentranskriptionen, Bestimmen einer Wahrscheinlichkeitsbewertung, welche angibt, wie häufig die Kandidatentranskription voraussichtlich ausgesprochen wird;
für jede der Kandidatentranskriptionen, Erweitern der Kandidatentranskription auf Teilwörter, Identifizieren von akustischen Bewertungen aus dem akustischen Modell, welche jedem der Teilwörter der Kandidatentranskription entsprechen und Bestimmen einer akustischen Übereinstimmungsbewertung aus den akustischen Bewertungen, die aus dem akustischen Modell (112) für die Teilwörter der Kandidatentranskription identifiziert wurden, wobei die akustische Übereinstimmungsbewertung eine phonetische Ähnlichkeit zwischen der Kandidatentranskription und der Äußerung angibt; und
Auswählen (240) einer Transkription unter den Kandidatentranskriptionen, basierend auf entsprechende Gesamtbewertungen, welche basierend auf einer Kombination der akustischen Übereinstimmungsbewertungen und der Wahrscheinlichkeitsbewertungen erzeugt werden.

8. System nach Anspruch 7, wobei das Sprachmodell (120), welches nicht durch den automatisierten Spracherkenner (110) zum Erzeugen der anfänglichen Kandidatentranskription verwendet wird, einen oder mehrere Begriffe umfasst, welche nicht in einem Sprachmodell vorhanden sind, welches durch den automatisierten Spracherkenner zum Erzeugen der anfänglichen Kandidatentranskription verwendet wird.

9. System nach Anspruch 7 oder Anspruch 8, wobei sowohl das Sprachmodell (120), welches nicht durch den automatisierten Spracherkenner (110) zum Erzeugen der anfänglichen Kandidatentranskription verwendet wird als auch ein Sprachmodell (114), welches durch den automatisierten Spracherkenner zum Erzeugen der anfänglichen Kandidatentranskription verwendet wird, eine Sequenz aus einem oder mehreren Begriffen umfassen, obwohl sie angeben, dass die Sequenz unterschiedliche Wahrscheinlichkeiten des Auftretens aufweist.

10. System nach einem der Ansprüche 7 bis 9, wobei das Sprachmodell (120), welches nicht durch den automatisierten Spracherkenner (110) zum Erzeugen der anfänglichen Kandidatentranskription verwendet wird, Wahrscheinlichkeiten des Auftretens von Wörtern oder Wortsequenzen angibt.

11. Software, umfassend Anweisungen, welche durch einen oder mehrere Computer ausführbar sind, welche, wenn ausgeführt, veranlassen, dass der eine oder die mehreren Computer das Verfahren nach einem der Ansprüche 1 bis 6 ausführen.

## Revendications

1. Procédé mis en œuvre sur ordinateur, comprenant :
l'obtention (210), à partir d'un modèle de langage d'un système de reconnaissance de parole automatisé (110), d'une transcription candidate initiale d'une parole sur la base de scores acoustiques générés par un modèle acoustique (112) du système de reconnaissance de parole automatisé (110) pour des sous-mots correspondant à des données acoustiques reçues par le système de reconnaissance de parole automatisé, les données acoustiques codant la parole ;
l'identification (220), sur la base d'un modèle de langage (120) qui n'est pas utilisé par le système de reconnaissance de parole automatisé dans la génération de la transcription candidate initiale, un ou plusieurs terme(s) qui est/sont phonétiquement similaire(s) à un ou plusieurs terme(s) qui se produit/produisent dans la transcription candidate initiale ;
la génération (230) d'une ou plusieurs transcription(s) candidate(s) additionnelle(s) sur la base sur l'un ou plusieurs terme(s) identifié(s),
pour chacune des transcriptions candidates, la détermination d'un score de probabilité qui reflète à quelle fréquence la transcription candidate est supposée être dite ;
pour chacune des transcriptions candidates, l'expansion de la transcription candidate en sous-mots, l'identification de scores acoustiques à partir du modèle acoustique qui correspondent à chacun des sous-mots de la transcription candidate et la détermination d'un score d'appariement acoustique à partir des scores acoustiques identifiés à partir du modèle acoustique (112) pour les sous-mots de la transcription candidate, le score d'appariement acoustique reflétant une similitude phonétique entre la transcription candidate et la parole ; et
la sélection (240) d'une transcription à partir des transcriptions candidates sur la base de scores globaux respectifs générés sur la base d'une combinaison des scores d'appariement acoustiques et des scores de probabilité.

2. Procédé selon la revendication 1, dans lequel le modèle de langage (120) qui n'est pas utilisé par le système de reconnaissance de parole automatisé (110) dans la génération de la transcription candidate initiale inclut un ou plusieurs terme(s) qui n'est/ne sont pas dans un modèle de langage utilisé par le système de reconnaissance de parole automatisé dans la génération de la transcription candidate initiale.

3. Procédé selon la revendication 1 ou la revendication 2, dans lequel le modèle de langage (120) qui n'est pas utilisé par le système de reconnaissance de parole automatisé (110) dans la génération de la transcription candidate initiale et un modèle de langage (114) utilisé par le système de reconnaissance de parole automatisé dans la génération de la transcription candidate initiale incluent tous deux une séquence d'un ou plusieurs terme(s) mais indiquent la séquence comme présentant différentes probabilités d'apparition.

4. Procédé selon l'une quelconque des revendications précédentes, dans lequel le modèle de langage (120) qui n'est pas utilisé par le système de reconnaissance de parole automatisé dans la génération de la transcription candidate initiale indique des probabilités que des mots ou des séquences de mots apparaissent.

5. Procédé selon l'une quelconque des revendications précédentes, dans lequel la détermination d'un score de probabilité qui reflète à quelle fréquence la transcription candidate est supposée être dite comprend :
la détermination du score de probabilité sur la base du modèle de langage qui n'est pas utilisé par le système de reconnaissance de parole automatisé dans la génération de la transcription candidate initiale.

6. Procédé selon l'une quelconque des revendications précédentes, dans lequel la génération d'une ou plusieurs transcription(s) candidate(s) supplémentaire(s) sur la base de l'un ou plusieurs terme(s) identifié(s) comprend :
la substitution de l'un ou des plusieurs terme(s) identifié(s) qui est/sont phonétiquement similaire(s) au ou aux terme(s) qui se produit/produisent dans la transcription candidate initiale avec le ou les terme(s) qui se produit/produisent dans la transcription candidate initiale.

7. Système comprenant :
un ou plusieurs ordinateur(s) (300) et un ou plusieurs dispositif(s) de stockage (304, 306) qui stockent des instructions pouvant être utilisées, lorsqu'elles sont exécutées par le ou les ordinateur(s), pour amener le ou les ordinateur(s) à réaliser des opérations comprenant :
l'obtention (210) à partir d'un modèle de langage d'un système de reconnaissance de parole automatisé (110), d'une transcription candidate initiale d'une parole sur la base de scores acoustiques générés par un modèle acoustique (112) du système de reconnaissance de parole automatisé (110) pour des sous-mots correspondant à des données acoustiques reçues par le système de reconnaissance de parole automatisé, les données acoustiques codant la parole ;
l'identification (220), sur la base d'un modèle de langage (120) qui n'est pas utilisé par le système de reconnaissance de parole automatisé dans la génération de la transcription candidate initiale, d'un ou plusieurs terme(s) qui est/sont phonétiquement similaire(s) à un ou plusieurs terme(s) qui se produit/produisent dans la transcription candidate initiale ;
la génération (230) d'une ou plusieurs transcription(s) candidate(s) supplémentaire(s) sur la base du ou des terme(s) identifié(s) ;
pour chacune des transcriptions candidates, la détermination d'un score de probabilité qui reflète à quelle fréquence la transcription candidate est supposée être dite ;
pour chacune des transcriptions candidates, l'expansion de la transcription candidate en sous-mots, l'identification de scores acoustiques à partir du modèle acoustique qui correspondent à chacun des sous-mots de la transcription candidate et la détermination d'un score d'appariement acoustique à partir des scores acoustiques identifiés à partir du modèle acoustique (112) pour les sous-mots de la transcription candidate, le score d'appariement acoustique reflétant une similitude phonétique entre la transcription candidate et la parole ; et
la sélection (240) d'une transcription à partir des transcriptions candidates sur la base de scores globaux respectifs générés sur la base d'une combinaison des scores d'appariement acoustiques et des scores de probabilité.

8. Système selon la revendication 7, dans lequel le modèle de langage (120) qui n'est pas utilisé par le système de reconnaissance de parole automatisé (110) dans la génération de la transcription candidate initiale inclut un ou plusieurs terme(s) qui n'est/ne sont pas dans un modèle de langage (114) utilisé par le système de reconnaissance de parole automatisé dans la génération de la transcription candidate initiale.

9. Système selon la revendication 7 ou la revendication 8, dans lequel le modèle de langage (120) qui n'est pas utilisé par le système de reconnaissance de parole automatisé (110) dans la génération de la transcription candidate initiale et un modèle de langage (114) utilisé par le système de reconnaissance de parole automatisé dans la génération de la transcription candidate initiale incluent tous deux une séquence d'un ou plusieurs terme(s) mais indiquent la séquence comme présentant différentes probabilités d'apparition.

10. Système selon l'une quelconque des revendications 7 à 9, dans lequel le modèle de langage (120) qui n'est pas utilisé par le système de reconnaissance de parole automatisé (110) dans la génération de la transcription candidate initiale indique des probabilités que des mots ou séquences de mots apparaissent.

11. Logiciel comprenant des instructions exécutables par un ou plusieurs ordinateur(s) qui, lors de cette exécution, amène(nt) le ou les ordinateur(s) à réaliser le procédé selon l'une quelconque des revendications 1 à 6.
